# EUROPÄISCHE PATENTSCHRIFT

(11) **EP 0 968 756 B1**
(45) Veröffentlichungstag und Bekanntmachung des Hinweises auf die Patenterteilung: **02.05.2003**
(21) Anmeldenummer: 99710004.5
(22) Anmeldetag: 02.07.1999
(51) Int. Cl.: B01D 61/58, B01D 61/02, B01D 61/14, C23G 1/36

(54) **Verfahren zur Aufbereitung metallhaltiger verbrauchter Beizsäuren**
Method of treating metal containing spent pickling acids
Procédé de traitement d'acides de décapage utilisés contenant des métaux

(30) Priorität: 02.07.1998 DE 19829592
(43) Veröffentlichungstag der Anmeldung: 05.01.2000
(73) Patentinhaber: Umweltanalystisches Zentrum Gröditz GmbH, 01609 Gröditz (DE); EISENMANN MASCHINENBAU KG (Komplementär: EISENMANN-Stiftung), 71032 Böblingen (DE)
(72) Erfinder: Sommer, Jan, 01665 Kleinzadel (DE); Triebert, Jürgen, Dr., 01558 Grossenhain (DE); Salomon, Dieter, Dr., 94253 Bischofsmais (DE); Seyrich, Andreas, 90431 Nürnberg (DE); Rebstock, Oliver, 74523 Schwäbisch-Hall (DE)
(74) Vertreter: Hofmann, Klaus, Dipl.-Ing.

(56) Entgegenhaltungen:
- EP-A- 0 398 863
- WO-A-92/20834
- WO-A-96/22153
- WO-A-99/14165
- US-A- 5 084 180
- US-A- 5 250 275

## Beschreibung

Die Erfindung betrifft ein Verfahren zur abfallarmen Aufarbeitung metallhaltiger verbrauchter Beizsäuren aus materialauf- und materialabtragenden Verfahren, beispielsweise aus Feuerverzinkungsanlagen, durch eine Kombination verschiedener, druckgeführter Membrantrenntechniken.

Metallhaltige verbrauchte Beizsauren fallen bei einer Vielzahl von chemisch-physikalischen Prozessen an und werden entweder zur Abtrennung von Wertmetallen weiterverarbeitet oder als Abfall einer Entsorgung zugeführt. Beispiele für solche metallhaltigen sauren Lösungen sind verbrauchte Beizsäuren aus Feuerverzinkereien, sowie Prozeß- und Spülwässer aus materialab- und materialauftragenden Verfahren (Galvano- und Oberflächentechnik).

Die abfallarme und ökonomisch vertretbare Aufarbeitung vor allem der Säuren und Abwässer aus Ätz- und Beizprozessen ist bisher nicht zufriedenstellend gelöst.

So werden die jährlich allein in deutschen Verzinkereien anfallenden mehreren 100.000 t Abfallbeizsäure, hauptsächlich HCl mit bis zu 200 g/l Fe und Zn, derzeit nahezu ausnahmslos durch Neutralisationsfällung entsorgt. Der entstehende Neutralisationsschlamm ist stofflich nur begrenzt verwertbar und muß in der Regel deponiert werden.

Verschiedene neue Konzepte versuchen, das Abfallaufkommen aus diesen Bereichen zu vermindern. Sie basieren auf einer Abtrennung der freien Säure aus der Altbeize und Rückführung in den Beizprozeß und/oder auf einer Metallabscheidung. Für die Metallsalze wird im weiteren eine Verwertung angestrebt.

Die den derzeitigen Stand der Technik verkörpernden Verfahren setzen obige Zielstellungen jedoch nur sehr unvollständig und mit immensem Aufwand an Chemikalien, Energie und Anlagentechnik um.

So können erschöpfte HCl-Beizen beispielsweise durch thermische Verfahren wie den Sprühröstprozeß (DE 195 34 545 A1) regeneriert werden. Der anlagentechnische und energetische Aufwand ist jedoch sehr hoch, außerdem sind nur zinkarme Beizen verarbeitbar, die z.B. in Feuerverzinkereien kaum anfallen.

Eine destillative Abtrennung und Rückführung freier Säure, wie sie z.B. in DE 39 37 833 A1 und DE 41 41 255 A1 vorgeschlagen wird, ist für die meisten oben genannten Anwendungsgebiete allein schon vom energetischen Standpunkt aus unökonomisch.

Verschiedenste Verfahren zur elektrochemischen Abscheidung von Metallen aus obigen Lösungen z.B. mittels Elektrolyse/Elektrodialyse (DE 41 31 793 A1, WO 93/0626 , EP 0463 671 A1, WO 90/0616, DE 44 35 232 A1, DE 39 43 142 A1) erlauben lediglich zur Gewinnung von Wertmetallen eine wirtschaftliche Nutzung im technischen Maßstab.

Andere Methoden wie die extraktive Abtrennung der Metallsalze aus Lösungen mittels organischer Lösungsmittel (DE 27 10 328 C2) oder die Bildung von Metallkomplexen durch Zusatz von Chelatbildnern und anschließende Ultrafiltration (US 4,741,831) benötigen große Chemikalienmengen, deren Einsatz einerseits sehr kostenintensiv ist und die andererseits nicht vollständig zurückgewonnen werden können, also zusätzliche Abfallprodukte bilden.

WO-A-96 22 153 offenbart ein Verfahren zur Aufbereitung von Säuren aus der Keramikindustrie, bei dem Aluminiumsalze durch Nanofiltration aus Schwefelsäure abgetrennt werden.

In US-A-52 50 275 wird beschrieben, vor einer nachfolgenden Pyrohydrolyse aus Eisen- und Siliziumverbindungen enthaltenden Säuren Siliziumoxid durch eine Querstrom-Mikrofiltration zu entfernen.

Der vorliegenden Erfindung liegt die Aufgabe zugrunde, mit einem grundsätzlich anderen technologischen Lösungsansatz diese metallhaltigen verbrauchten Beizsäuren aus materialauf- und materialabtragenden Verfahren ökonomisch, nahezu vollständig und mit geringem Chemikalieneinsatz aufzuarbeiten. Die abgetrennte und ggf. aufkonzentrierte freie Säure soll erneut im Produktionsprozeß eingesetzt und die Metallsalze sollen mit Ausnahme eines geringen Anteils einer Verwertung zugeführt werden können.

Erfindungsgemäß wird die Aufgabe durch die kennzeichnenden Merkmale des Patentanspruchs 1 gelöst. In den abhängigen Ansprüchen wird die Kombination verschiedener Membrantrenntechniken, Oxidation des im Nanofiltrationskonzentrat angereicherten Fe²⁺ zu Fe³⁺ mittels H₂O₂ und anschließende fraktionierte Metallhydroxidfällung beschrieben.

Im ersten Verfahrensschritt wird die metallhaltige verbrauchte Beizsäure nach Absetzen der Sedimente in eine Querstrom-Mikro- oder Ultrafiltrationsanlage mit automatischer Rückspüleinrichtung überführt und dort von ungelösten, festen Verunreinigungen - bei Beizsäuren aus Feuerverzinkungsanlagen in der Regel ca. 0,05 - 0,2 Gew.-% - befreit. Zur Abtrennung der freien Säure und Aufkonzentrierung der gelösten Metallsalze wird die verbrauchte Beize, welche ca. 40 - 100 g/l Fe²⁺/Fe³⁺, 5 - 150 g/l Zn²⁺ und in Summe ca. 1 g/l andere Metalle gelöst enthält, anschließend einer Nanofiltrationsanlage zugeführt.

Die als Permeat erhaltene, metallarme Säure kann im Folgenden mittels Umkehrosmose auf den für den jeweiligen Wiederverwendungszweck erforderlichen Säuregehalt aufkonzentriert werden.

Das Verfahren ist weiterhin dadurch charakterisiert, daß das Metallkonzentrat der Nanofiltration in einen Chargenbehälter überführt und die darin enthaltenen Fe²⁺-Ionen durch Zusatz von H₂O₂ zu Fe³⁺-Ionen oxidiert werden.

Anschließend erfolgt im selben Behälter durch Zugabe von KOH, NaOH oder Ca(OH)₂ und eventuell von Puffersubstanzen die quantitative Ausfällung des gelösten Eisens als Fe(OH)₃ bei einem pH-Wert von 3 - 6. Dieses wird nachfolgend über eine weitere Mikrofiltrationsanlage und/oder Filterpresse abgetrennt und entwässert. Alle anderen Metalle verbleiben in Lösung. Entsprechend der zur späteren Verwertung nötigen Reinheit des Zn(OH)₂ kann im Anschluß durch Zugabe von KOH, NaOH oder Ca(OH)₂ einerseits ein pH-Wert von 7 - 12 eingestellt und das Zn(OH)₂ im Gemisch mit den restlichen Metallhydroxiden ausgefällt und abfiltriert werden. Andererseits ist es möglich, durch Einstellung eines pH-Bereiches von 12 - 14 die Hydroxide des Zn, Pb, Cr und teilweise auch Cu als Hydroxokomplexe wieder in Lösung zu bringen und die anderen, im Laugenüberschuß schwerlöslichen Hydroxide abzutrennen. Durch anschließende H₂O₂-Zugabe zum stark basischen Filtrat wird das Blei als PbO₂ ausgefällt und das Chrom zu löslichem Chromat oxidiert. Nach Abfiltration des PbO₂ wird im Filtrat durch Zugabe von saurem Umkehrosmose- bzw. Nanofiltrat der pH-Wert auf 7 - 12 abgesenkt und damit das Zn(OH)₂ in hoher Reinheit quantitativ ausgefällt.

Die Abtrennung und Entwässerung des Zn(OH)₂ geschieht wiederum mittels Mikrofiltration und/oder Filterpresse. Das im Filtrat gelöste Chromat wird anschließend geeignet entfernt.

Als Produkte dieses Verfahrens erhält man:
1. Eine aufbereitete, metallarme und konzentrierte Säure, die z.B. als Beizsäure wieder in den Produktionsprozeß zurückgeführt wird
2. Eisen-III-Hydroxid
3.a Zink-II-Hydroxid, verunreinigt mit weiteren Metallhydroxiden bzw.
3.b Zink-II-Hydroxid hoher Reinheit, PbO₂, Gemisch verschiedener Metallhydroxide.

Als Abfälle entstehen bei diesem Verfahren:
1. Wenige Prozent Schlamm, angereichert mit einem Gemisch verschiedener Metallsalze, entweder zur weiteren Verwertung oder Deponierung
2. Salzhaltiges Wasser zur Einleitung in Vorfluter.

Vorteile dieses Verfahrens sind:
- wesentlich geringerer Chemikalieneinsatz als bei bekannten Verfahren durch Anwendung physikalischer Membrantrennverfahren
- wesentlich geringeres Abfallaufkommen als bei bekannten Verfahren
- Rückgewinnung von über 90% der eingesetzten metallhaltigen Mineralsäuren sowie Inhaltsstoffe in einer zur Wiederverwertung genügenden Reinheit
- Verfahren ist ökonomischer als andere Aufarbeitungstechniken, da die zurückgewonnene, metallarme Säure sowie die Metallsalze verkauft oder wiedereingesetzt werden können und nur zu einem geringen Teil Abfälle zur Deponierung anfallen.

Nachfolgend wird die Erfindung an einem Ausführungsbeispiel zur Aufarbeitung verbrauchter HCl-Beize aus Feuerverzinkereien näher erläutert.

Die nach Inhaltsstoffen und Metallgehalt sortenrein gelagerten, verbrauchten Mineralsäuren 1 werden nach Absetzen der Sedimente aus Vorlagebehältern 2-4 in eine Querstrom-Mikro- oder Ultrafiltrationsanlage 5 mit automatischer Rückspüleinrichtung überführt und dort von ungelösten, festen Verunreinigungen - bei Beizsäuren aus Feuerverzinkungsanlagen in der Regel ca. 0,05-0,2 Gew.-% - befreit.

Bei Versuchen zur Mikrofiltration von 3000 1 Beizsäure mit überdurchschnittlich hohem Anteil an ungelösten Substanzen (Sedimente, Schwebstoffe etc.) konnten bei Feststoffgehalten des Konzentrates 6 zwischen 10 und 100 g/l stabile Filtratleistungen von 100 - 70 l/h je m² Filterfläche erzielt werden. Dazu wurde die Membran im Abstand von 5 Minuten für jeweils 2 Sekunden mit Gegendruck automatisch rückgespült.

Das feststofffreie Permeat 7 wird in einen Arbeitsbehälter mit Niveaugeber gepumpt, welcher als Vorlage für die Nanofiltration 8 dient. Das Konzentrat 6 im Vorlagebehälter der Mikrofiltration wird bei Überschreitung eines maximalen Feststoffgehaltes kontinuierlich oder diskontinuierlich abgezogen und über eine Filterpresse 14 entwässert. Das hierbei erhaltene Filtrat 16 wird wieder in die Vorlagebehälter 2-4 gepumpt, der saure Restschlamm 17 diskontinuierlich einem Chargenbehälter 19 zugeführt, in welchem er anschließend neutralisiert wird. Nach erfolgter Entwässerung und Trocknung des neutralisierten Schlammkonzentrates 22 gelangt der Filterkuchen 15 zur Verwertung bzw. Deponierung.

Zur Abtrennung der freien Säure und Aufkonzentrierung der gelösten Metallsalze wird das Mikrofiltrationspermeat 7, welches ca. 50 - 100 g/l Fe²⁺/Fe³⁺, 5 - 150 g/l Zn²⁺ und in Summe ca. 1 g/l andere Metalle gelöst enthält, nanofiltriert. Da im Falle solch hoher Salzkonzentrationen beträchtliche osmotische Drücke überwunden werden müssen, arbeitet die Nanofiltrationsanlage 8 in der Regel im Druckbereich bis 200 bar. Dies erfordert hochgradig korrosions- und druckbeständige Spezialpumpen, Membranen und Werkstoffe.

Bei der Nanofiltration von ca. 100 1 einer zuvor mikrofiltrierten HCl-Beize untenstehender Zusammensetzung stellte sich pro m² Filterfläche ein Filtratfluß von 10 - 15 l/h ein. Die erhaltenen Metallkonzentrationen im Permeat und die prozentual erreichte Metallabreicherung sind in Tabelle 1 zusammengestellt.

**Tabelle 1:**

| Erzielte Metallabreicherung bei Nanofiltration von HCl-Beizsäure | | | | |
|---|---|---|---|---|
| Metall | Dimension | HCl-Beize | Permeat | Abreicherung |
| Fe (ges.) | g/l | 54,4 | 2,37 | 95,6 % |
| Zn | g/l | 151 | 59,2 | 60,8 % |
| Mn | mg/l | 378 | 24,1 | 93,6 % |
| Pb | mg/l | 169 | 104 | 38,5 % |
| Cu | mg/l | 35,1 | 20,0 | 43,0 % |
| Ni | mg/l | 30,4 | 1,84 | 93,9 % |
| Cr | mg/l | 24,8 | 0,48 | 98,1 % |
| Cd | mg/l | 2,45 | 0,32 | 86,9 % |

Das metallarme Nanofiltrationspermeat 10 wird zur Aufkonzentrierung auf den für den Produktionsprozeß notwendigen Säuregehalt einer Umkehrosmoseanlage 11 zugeführt. Als Permeat 13 entsteht hierbei entsalztes Wasser, das zur Erhöhung der Säureausbeute dem Konzentrat der Nanofiltration (saure Salzlösung) zugeführt wird. Als Konzentrat 12 erhält man eine metallarme, konzentrierte Salzsäure, welche nach entsprechender Lagerung 37 wieder in den Produktionsprozeß zurückgeführt oder verkauft werden kann.

Das Konzentrat 9 im Vorlagebehälter der Nanofiltration wird bei Überschreitung bestimmter maximaler Metallsalzkonzentrationen, z.B. der Löslichkeitsgrenze, gegebenenfalls nach Abtrennung auskristallisierter Metallsalze kontinuierlich oder diskontinuierlich in eine Lagerstation 18 abgezogen und in Arbeitsbehältern gemäß seinem Gehalt an Metallen und anderen Inhaltsstoffen möglichst sortenrein gelagert. Aus diesen werden die Metallsalzkonzentrate diskontinuierlich in eine mit Rührwerk und Wärmetauscher ausgestattete, temperaturbeständige Chargenanlage 19 gepumpt und dort weiterbehandelt.

Durch Zugabe von KOH, NaOH oder Ca(OH)₂ 20 wird ein pH-Wert von 2 - 6 eingestellt. Durch kontinuierlichen Zusatz jeweils kleiner Mengen H₂O₂ 21 zur HCl-Beize werden die darin zu ca. 80 - 90 % in der zweiwertigen Form vorliegenden Eisenionen unter definierten Bedingungen quantitativ zu Fe³⁺-Ionen oxidiert, wobei das H₂O₂ lediglich zu Wasser und Sauerstoff reagiert. Um dabei die Bildung von Chlorgas zu vermeiden oder zu minimieren, sollte diese Oxidation nicht bei einem pH-Wert < 2 erfolgen.

Untersuchungen ergaben, daß hohe Zinkgehalte in den Beizen die H₂O₂-Ausbeute bei dieser Reaktion wesentlich vermindern. Durch geeignetes Vermischen von sortenrein gelagerten Nanofiltrationskonzentraten 18 hoher und niedriger Zinkkonzentration sollte die zu behandelnde Charge vor der Oxidation so eingestellt werden, daß ihr Zinkanteil nicht mehr als 30-40% des Eisen-II-gehaltes beträgt. Bei Versuchen zur Oxidation verschiedener HCl-Beizsäuren mit Gehalten von 40-60 g/l Fe²⁺ und 3-10 g/l Zn²⁺ wurden pro kg Fe²⁺ zwischen 1,1 und 2,0 kg 50%-iges H₂O₂ verbraucht. Bezogen auf die Reaktion Fe²⁺ zu Fe³⁺ entspricht dies einer erzielten H₂O₂-Ausbeute von ca. 30-54%.

In Tabelle 2 sind anhand einiger Beispiele die erzielten Ergebnisse für die Oxidation von Fe²⁺ mittels H₂O₂ in verschiedenen HCl-Beizsäuren zusammengefaßt.

**Tabelle 2:**

| Oxidation von Fe²⁺ zu Fe³⁺ mittels H₂O₂ in verbrauchten HCl-Beizen aus verschiedenen Feuerverzinkereien | | | |
|---|---|---|---|
| Beizsäure + H₂O₂-Zusatz (H₂O₂ techn., 50 %-ig) | Fe²⁺-Konzentration [g/l] *⁾ | Fe³⁺-Konzentration [g/l] *⁾ | Fe²⁺-Umsatz [ % ] |
| HCl-Beize 1: 9,5 g/l Zn | 40,8 | 7,0 | / |
| Beize 1 + 2,5 Vol.-% H₂O₂ | 19,5 | 23,4 | 52,2 |
| Beize 1 + 5,0 Vol.-% H₂O₂ | 1,51 | 42,0 | 96,3 |
| Beize 1 + 7,5 Vol.-% H₂O₂ | 0,07 | 40,9 | 99,8 |
| HCl-Beize 2: 2,8 g/l Zn | 53,1 | 11,5 | / |
| Beize 2 + 5 Vol.-% H₂O₂ | 2,59 | 61,4 | 95,1 |
| Beize 2 + 10 Vol.-% H₂O₂ | 0,75 | 55,2 | 98,6 |
| Beize 2 + 15 Vol.-% H₂O₂ | 0,14 | 53,7 | 99,7 |
| HCl-Beize 3: 105 g/l Zn | 34,6 | 4,2 | / |
| Beize 3 + 3,5 Vol.-% H₂O₂ | 26,4 | 5,2 | 23,7 |
| Beize 3 + 6,0 Vol.-% H₂O₂ | 21,9 | 5,8 | 36,7 |
| Beize 3 + 12,5 Vol.-% H₂O₂ | 11,5 | 7,2 | 66,8 |

| | | | |
|---|---|---|---|
| *⁾ während und nach der Oxidation ausfallendes Fe(OH)₃ beeinflußt die Gesamteisenbilanz | | | |

Nach Abschluß der Reaktion erfolgt im selben Behälter eine teilweise Neutralisierung des sauren Salzkonzentrates, indem durch Zugabe von KOH, NaOH oder Ca(OH)₂ und eventuell von Puffersubstanzen ein pH-Wert von 3 - 6 eingestellt wird. Wie in Versuchen mit verschiedenen Beizsäuren nachgewiesen wurde, kommt es dabei zur quantitativen Ausfällung des gelösten Eisens als Fe(OH)₃, welches anschließend, gegebenenfalls nach Zugabe von Flockungshilfsmitteln, über eine weitere Mikrofiltrationsanlage und/oder Filterpresse 26 abgetrennt und entwässert wird. Alle anderen Metalle verbleiben in Lösung und werden im Permeat 23 und Filtrat 28 einem weiteren Arbeitsbehälter 25 zugeführt, der als Zwischenspeicher dient. Aus diesem wird die zinkreiche und nahezu eisenfreie Metallsalzlösung diskontinuierlich in den Chargenbehälter 19 gepumpt. Entsprechend der zur späteren Verwertung nötigen Reinheit des Zn(OH)₂ kann im Anschluß durch Zugabe von KOH, NaOH oder Ca(OH)₂ 20 einerseits ein pH-Wert von 7 - 12 eingestellt und das Zn(OH)₂ im Gemisch mit den restlichen Metallhydroxiden ausgefällt und ebenfalls über die Mikrofiltrationsanlage und/oder Filterpresse 26 abfiltriert werden. Andererseits ist es möglich, durch Einstellung eines pH-Bereiches von 12 - 14 die Hydroxide des Zn, Pb, Cr und teilweise auch Cu als Hydroxokomplexe wieder in Lösung zu bringen und die anderen, im Laugenüberschuß schwerlöslichen Hydroxide abzufiltrieren. Durch anschließende H₂O₂-Zugabe 21 zum stark basischen Filtrat wird das Blei als PbO₂ ausgefällt und das Chrom zu löslichem Chromat oxidiert. Nach Abfiltration des PbO₂ wird im Filtrat durch Zugabe von saurem Umkehrosmose- 13 bzw. Nanofiltrationspermeat 10 der pH-Wert auf 7 - 12 abgesenkt und damit das Zn(OH)₂ in hoher Reinheit quantitativ ausgefällt. Die Abtrennung und Entwässerung des Zn(OH)₂ geschieht wiederum mittels Mikrofiltration und/oder Filterpresse 26. Das basische und nahezu metallfreie Mikrofiltrationspermeat 30 bzw. Filtrat der Kammerfilterpresse 31 wird entweder einer Neutralisationsanlage 32 zugeführt und dort durch Zugabe von saurem Umkehrosmose- 13 bzw. Nanofiltrationspermeat 10 und gegebenenfalls von KOH, NaOH oder Ca(OH)₂ 33 neutralisiert, oder zur Neutralisation des sauren Restschlammes 17 diskontinuierlich in den Chargenbehälter 19 überführt.

Erfolgt die Abtrennung der Metalle über Hydroxokomplexe, muß anschließend in der Neutralisationsanlage 32 das im Filtrat gelöste Chromat geeignet entfernt werden. Bevor das salzhaltige, neutralisierte Abwasser 36 die Anlage verläßt, durchläuft es abschließend eine Sicherheitsfiltration 35.

### Bezugszeichenliste

- 1: Anlieferung Altbeize
- 2: Vorlagebehälter für Eisensäure
- 3: Vorlagebehälter für Zinksäure
- 4: Vorlagebehälter für Mischsäure
- 5: Mikrofiltrationsanlage mit Arbeits- und Spülbehälter
- 6: Saures Feststoff-Konzentrat
- 7: Mikrofiltrationspermeat
- 8: Nanofiltrationsanlage mit Arbeits- und Spülbehälter
- 9: Saures Metall-Konzentrat
- 10: Nanofiltrationspermeat
- 11: Umkehrosmoseanlage mit Arbeitsbehälter
- 12: Metallarmes Säure-Konzentrat
- 13: Umkehrosmosepermeat
- 14: Filterpresse
- 15: Neutralisierter Filterkuchen zur Verwertung/Deponie
- 16: Beizsäurefiltrat
- 17: Saurer Schlamm
- 18: Lagerstation für Metallsalz-Konzentrate (sortenrein)
- 19: Chargenanlage mit Mikrofiltrationsanlage
- 20: Natronlauge
- 21: Wasserstoffperoxid
- 22: Neutralisiertes Schlammkonzentrat
- 23: Mikrofiltrationspermeat
- 24: Eisenfreies Mikrofiltrationspermeat pH Wert 3-6
- 25: Eisenfreies Mikrofiltrationspermeat pH Wert 3-6
- 26: Filterpresse zur Entwässerung von Hydroxidschlämmen
- 27: Filterkuchen zur stofflichen Verwertung
- 28: Eisenfreies Filtrat pH-Wert 3-6
- 29: Basisches Filtrat pH-Wert 8-14 (metallfrei)
- 30: Basisches Permeat pH-Wert 8-14 (metallfrei)
- 31: Basisches Filtrat pH-Wert 8-14 (metallfrei)
- 32: Neutralisation
- 33: Natronlauge
- 34: Wasserstoffperoxid
- 35: Sicherheitsfiltration
- 36: Abwasser zur Kanalisation
- 37: Lagerstation für Recycling-Säure
- 38: Säure zur Produktion

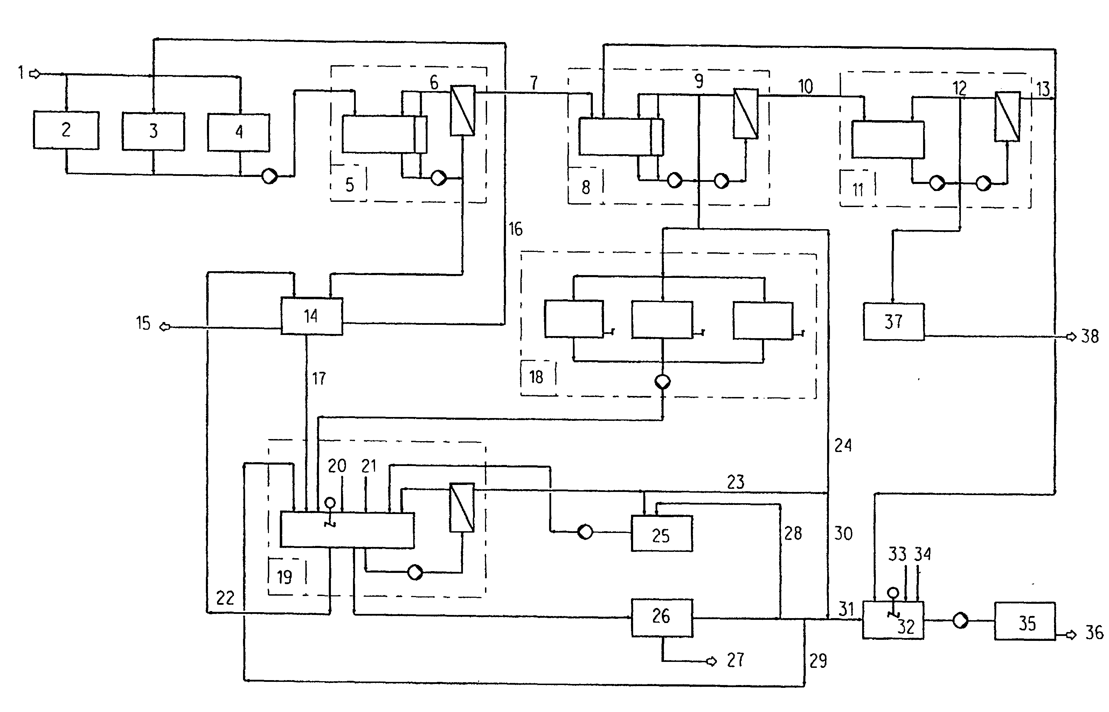

## Patentansprüche

1. Verfahren zur Aufbereitung metallhaltiger, verbrauchter Beizsäuren aus materialauf- und materialabtragenden Verfahren, beispielsweise aus Feuerverzinkereien, **dadurch gekennzeichnet, dass** die metallhaltige Beizsäure zur Abscheidung der nicht gelösten, festen Bestandteile über eine Querstrom-Mikro- oder Ultrafiltration gereinigt und anschließend zur Trennung der freien Säure von den gelösten Metallsalzen nanofiltriert wird.

2. Verfahren nach Anspruch 1, **dadurch gekennzeichnet, dass** die metallarme, gereinigte freie Säure mittels Umkehrosmose auf einen notwendigen Säuregehalt aufkonzentriert wird.

3. Verfahren nach den Ansprüchen 1 oder 2, **dadurch gekennzeichnet, dass** die Metalle aus dem Konzentrat der Nanofiltration abgetrennt werden.

4. Verfahren nach den Ansprüchen 1 bis 3, **dadurch gekennzeichnet, dass** das Konzentrat der Nanofiltration in einen Chargenbehälter überführt und die darin enthaltenen Fe²⁺-Ionen zu Fe³⁺- Ionen durch Zusatz von H₂O₂ oxidiert werden.

5. Verfahren nach Anspruch 4, **dadurch gekennzeichnet, dass** das Konzentrat der Nanofiltration nach erfolgter Oxidation durch H₂O₂ mit KOH oder NaOH oder Ca(OH)₂, gegebenenfalls unter Zugabe von Puffersubstanzen und Flockungshilfsmitteln, bis zum Erreichen eines pH-Wertes von maximal 6 neutralisiert wird, anschließend dieses Konzentrat in eine Mikrofiltrations- oder Filtertrennanlage überführt und dort behandelt wird und eine Abtrennung sowie Trocknung des ausgefällten Fe(OH)₃ erfolgt.

6. Verfahren nach Anspruch 5, **dadurch gekennzeichnet, daß** zum Konzentrat der Nanofiltration nach erfolgter Abtrennung des ausgefällten Fe(OH)₃ eine solche Menge KOH oder NaOH oder Ca(OH)₂ zugegeben wird, daß eine quantitative Ausfällung des Zinks und der restlichen gelösten Metalle als Hydroxidgemisch erfolgt.

7. Verfahren nach Anspruch 5, **dadurch gekennzeichnet, daß** dem Konzentrat der Nanofiltration nach erfolgter Abtrennung des ausgefällten Fe(OH)₃ eine solche Menge KOH oder NaOH oder Ca(OH)₂ zugegeben wird, daß sich ein pH-Wert von 12 - 14 einstellt und die Hydroxide des Zn, Pb, Cr und teilweise auch Cu als Hydroxokomplexe wieder gelöst werden, anschließend die restlichen, im Laugenüberschuß schwerlöslichen Metallhydroxide durch Filtration abgetrennt werden, danach zum stark basischen Filtrat H₂O₂ zugegeben wird, das ausgefallene PbO₂ abfiltriert wird, nachfolgend eine Absenkung des pH-Wertes auf 7 - 12 durch Zugabe von saurem Umkehrosmose- bzw. Nanofiltrat erfolgt und eine quantitative Ausfällung des Zn(OH)₂ in hoher Reinheit erfolgt, wonach eine Abtrennung und Entwässerung des Zn(OH)₂ mittels Mikrofiltration und/oder Filterpresse sowie eine anschließende Trocknung erfolgt.

8. Verfahren nach den Ansprüchen 1 bis 7, **dadurch gekennzeichnet, daß** das Permeat der Umkehrosmose in das Konzentrat der Nanofiltration zur Erhöhung der Säureausbeute bzw. in die stark basischen Filtrate der Metallhydroxidfällung zum Zweck der Neutralisation überführt wird.

## Claims

1. Process for treating metal-containing, spent pickling acids from material-applying and material-removing processes, for example from hot-dip galvanization installations, **characterized in that** the metal-containing pickling acid is purified by means of cross-current microfiltration or ultrafiltration, in order to separate out the undissolved, solid constituents, and is then nanofiltered in order to separate the free acid from the dissolved metal salts.

2. Process according to Claim 1, **characterized in that** the low-metal, purified free acid is concentrated to a required acid content by means of reverse osmosis.

3. Process according to Claim 1 or 2, **characterized in that** the metals are separated out of the concentrate from the nanofiltration.

4. Process according to Claims 1 to 3, **characterized in that** the concentrate from the nanofiltration is transferred into a batch vessel, and the Fe²⁺ ions which it contains are oxidized to form Fe³⁺ ions by the addition of H₂O₂.

5. Process according to Claim 4, **characterized in that** the concentrate from the nanofiltration, after oxidation by means of H₂O₂ has taken place, is neutralized with KOH or NaOH or Ca(OH)₂, if appropriate with the addition of buffer substances and flocculation aids, until a pH of at most 6 is reached, then this concentrate is transferred into a microfiltration or filter separation installation, where it is treated, and the precipitated Fe(OH)₃ is separated out and dried.

6. Process according to Claim 5, **characterized in that** after the precipitated Fe(OH)₃ has been separated out, KOH or NaOH or Ca(OH)₂ is added to the concentrate from the nanofiltration in a quantity which is such that quantitative precipitation of the zinc and of the remaining dissolved metals as a hydroxide mixture takes place.

7. Process according to Claim 5, **characterized in that** after the precipitated Fe(OH)₃ has been separated out, KOH or NaOH or Ca(OH)₂ is added to the concentrate from the nanofiltration in a quantity which is such that a pH of 12-14 is established and the hydroxides of the Zn, Pb, Cr and in some cases also Cu are dissolved again as hydroxo complexes, then the remaining metal hydroxides which have a low solubility in the excess hydroxide solution, are separated out by filtration, then H₂O₂ is added to the strongly basic filtrate, the precipitated PbO₂ is filtered off, then the pH is reduced to 7-12 by addition of acidic reverse osmosis filtrate or nanofiltrate, and the Zn(OH)₂ is quantitatively precipitated in a high purity, after which the Zn(OH)₂ is separated off and dewatered by means of microfiltration and/or a filter press and subsequent drying.

8. Process according to Claims 1 to 7, **characterized in that** the permeate from the reverse osmosis is transferred into the concentrate from the nanofiltration in order to increase the acid yield or into the strongly basic filtrates from the metal hydroxide precipitation for the purpose of neutralization.

## Revendications

1. Procédé de traitement d'acides de décapage usés contenant des métaux, provenant de procédés de dépôt et d'enlèvement de matière, par exemple d'installations de galvanisation au trempé, **caractérisé en ce que** l'on épure les acides de décapage contenant des métaux par micro- ou ultrafiltration à courant transversal en vue de précipiter les composants solides non dissous et on les soumet ensuite à une nanofiltration pour séparer l'acide libre des sels métalliques dissous.

2. Procédé suivant la revendication 1, **caractérisé en ce que** l'on concentre l'acide libre épuré, pauvre en métaux, par osmose inverse jusqu'à une teneur en acide nécessaire.

3. Procédé suivant la revendication 1 ou 2, **caractérisé en ce que** l'on sépare les métaux hors du concentrat de la nanofiltration.

4. Procédé suivant les revendications 1 à 3, **caractérisé en ce que** l'on transfère le concentrat de la nanofiltration dans un réservoir de charge et l'on oxyde les ions Fe²⁺ contenus dans celui-ci en ions Fe³⁺ par addition de H₂O₂.

5. Procédé suivant la revendication 4, **caractérisé en ce qu'**après l'exécution de l'oxydation par le H₂O₂, on neutralise le concentrat de la nanofiltration avec KOH ou NaOH ou de Ca(OH)₂, le cas échéant avec addition de dépresseurs et d'agents floculants, jusqu'à atteindre un pH de 6 au maximum, on transfère et on traite ensuite ce concentrat dans une installation de microfiltration ou de séparation par filtrage et on effectue une séparation ainsi qu'un séchage du Fe(OH)₃ précipité.

6. Procédé suivant la revendication 5, **caractérisé en ce qu'**après l'exécution de la séparation du Fe(OH)₃ précipité, on ajoute au concentrat de la nanofiltration une quantité de KOH ou de NaOH ou de Ca(OH)₂ telle qu'il se produise une précipitation quantitative du zinc et des autres métaux dissous sous forme d'un mélange d'hydroxydes.

7. Procédé suivant la revendication 5, **caractérisé en ce qu'**après l'exécution de la séparation du Fe(OH)₃ précipité, on ajoute au concentrat de la nanofiltration une quantité de KOH ou de NaOH ou de Ca(OH)₂ telle qu'il s'établisse une valeur de pH de 12 - 14 et que les hydroxydes du Zn, Pb, Cr et en partie aussi du Cu soient à nouveau mis en solution sous la forme de complexes hydroxydes, on sépare ensuite par filtration les hydroxydes métalliques résiduels difficilement solubles dans un excès de lessive, on ajoute ensuite du H₂O₂ au filtrat très basique, on filtre le PbO₂ précipité, puis on effectue un abaissement de la valeur du pH à 7 - 12 par addition de filtrat acide de l'osmose inverse ou de la nanofiltration, et on opère une précipitation quantitative du Zn(OH)₂ de grande pureté, et on procède enfin à une séparation et à un essorage du Zn(OH)₂ par microfiltration et/ou au moyen d'un filtre-presse et ensuite à un séchage.

8. Procédé suivant les revendications 1 à 7, **caractérisé en ce que** l'on ajoute le perméat de l'osmose inverse dans le concentrat de la nanofiltration pour augmenter le rendement en acide, respectivement dans les filtrats fortement basiques de la précipitation des hydroxydes métalliques pour leur neutralisation.
